# FASCICULE DE BREVET EUROPEEN

(11) **EP 0 493 322 B1**
(45) Date de publication et mention de la délivrance du brevet: **24.05.1995**
(21) Numéro de dépôt: 91810975.2
(22) Date de dépôt: 13.12.1991
(51) Int. Cl.: E06B 9/68, H02P 7/00

(54) **Dispositif de commande d'un moteur de store ou similaires à deux sens de rotation**
Antriebsvorrichtung für den Motor eines Stores und dergleichen in beiden Rotationsrichtungen
Assembly for driving a motor for blinds and similar in both directions of rotation

(30) Priorité: 28.12.1990 FR 9016462
(43) Date de publication de la demande: 01.07.1992
(73) Titulaire: SOMFY, F-74300 Cluses (FR)
(72) Inventeur: Cheron, Eric, F-74130 Bonneville (FR)
(74) Mandataire: Meylan, Robert Maurice

(56) Documents cités:
- WO-A-86/04382
- US-A- 3 848 165
- US-A- 4 712 104
- PATENT ABSTRACTS OF JAPAN vol. 8, no. 229 (E-273)(1666) 20 Octobre 1984 & JP-A-59 110 398 (EMU SYSTEM GIKEN KK) 26 Juin 1984

## Description

La présente invention a pour objet un dispositif de commande pour moteur asynchrone à deux sens de rotation utilisé pour l'entraînement d'un store, volet roulant, porte ou similaires, comprenant un boîtier de commande intégré au moteur et un point de commande équipé de contacts Montée, Descente et Stop actionnables manuellement et dont l'actionnement assure la rotation du moteur dans le sens désiré, respectivement son arrêt.

Lorsqu'un installateur procède à l'installation d'un store ou d'un volet motorisé, et plus particulièrement à la connexion des fils de sens de rotation du moteur sur l'inverseur de commande, il oriente les fils de manière que lorque par la suite l'utilisateur actionnera la touche "Montée" il se produise effectivement une montée du store ou du volet et, inversement, une descente lorsque l'utilisateur actionnera la touche "Descente".

Dans une installation simple, où il n'y a que des moteurs reliés directement aux inverseurs, il n'y a pas de difficultés pour faire le choix de l'orientation des fils. L'installateur réalise les connexions sans se préoccuper de leur orientation, puis il procède à un essai. S'il constate qu'en actionnant la touche "Descente", il y a une descente effective, il en déduit que le branchement est adapté et il n'y a rien à modifier. Si, au contraire, il constate une montée, alors il inverse l'orientation des fils de sens.

Si le courant électrique n'est pas disponible et qu'il n'est pas possible de procéder immédiatement à un essai, le fait que les connexions soient situées sur l'inverseur permet d'avoir une accessibilité en permanence et donc de faire les essais et les modifications éventuelles, après coup, sans nécessiter de moyens particuliers et sans difficulté. Dans tous les cas l'installation se fait très rapidement.

La situation est différente si la commande est réalisée par l'intermédiaire d'un boîtier de commande car dans ce cas les connexions à inverser sont situées sur le boîtier de commande. Or le boîtier, qui n'est d'aucune utilité directe pour l'utilisateur, est de préférence installé en un endroit caché. En conséquence le boîtier est souvent mal accessible.

Le problème lié à l'accessibilité du boîtier est encore plus important lorsque celui-ci est intégré au moteur. Dans ce cas, les fils de sens de rotation du moteur ne sont pas accessibles sans démontage du moteur. En cas de démontage du moteur il faut également démonter une partie de l'installation. Si le moteur est disposé en façade (cas des stores) et si l'essai doit être différé il faut laisser les échafaudages ou bien les réinstaller.

Une solution pour résoudre ce problème est de repérer le sens de branchement pour qu'il soit adapté du premier coup. Cette solution demande toutefois un effort intellectuel important pour l'installateur, car il faut qu'il prenne en compte non seulement le sens de rotation du moteur, mais également le côté où le moteur est installé dans l'embrasure. Selon que le moteur est installé à droite ou à gauche, on obtient en effet pour une même connexion, une montée ou une descente. Les risques d'erreurs sont donc importants.

Du document WO 86/04382, on connaît un dispositif de commande automatique de store vénitien comprenant un capteur relié à une unité logique de traitement pilotant une unité de commande du moteur du store. Un commutateur inverseur manuel est disposé entre l'unité logique et l'unité de commande du moteur pour permettre d'inverser le sens de rotation du moteur, pour un même signal reçu du capteur, en fonction de la saison. Une telle solution pourrait être utilisée pour résoudre le problème exposé plus haut. Le commutateur inverseur pourrait être situé sur le moteur lui-même ou relié au moteur par un câble. Or, sortir un câble du moteur ou placer un commutateur sur le moteur exige de l'espace qui n'est pas toujours disponible, surtout si le moteur est un moteur tubulaire, l'espace disponible correspondant dans ce cas sensiblement à la section du tube du moteur. En outre, si le commutateur est disposé sur le moteur on retrouve les problèmes d'accessibilité évoqués plus haut. Si le commutateur est disposé au bout d'un câble, il faut l'installer de manière qu'il reste accessible et que l'esthétique soit préservée. Une solution de compromis n'est jamais pleinement satisfaisante.

La présente invention a pour but de réaliser un dispositif de commande pour moteur à électronique de commande intégrée permettant de se libérer des contraintes d'installation.

Le dispositif selon l'invention est défini à la revendication 1.

Le dispositif selon l'invention tire pleinement profit de l'intégration du boîtier de commande dans le moteur.

Il ne nécessite qu'un câblage minimal entre le point de commande et le moteur, à savoir les fils de télécommande basse tension. Au moteur arrivent en outre, bien entendu, deux fils d'alimentation, mais ceux-ci restent dans les réservations du bâtiment ou dans le caisson du store. Les installations peuvent donc être simples et discrètes et l'accessibilité permanente des moyens d'adaptation du sens de rotation du moteur aux boutons de commande permet d'exécuter en tout temps cette adaptation.

Un exemple d'exécution du dispositif selon l'invention sera décrit en relation avec le dessin annexé, dans lequel :
la figure 1 est un schéma général d'une installation comprenant un moteur;
la figure 2 représente le schéma bloc de l'unité logique de traitement;
la figure 3 représente l'interface Entrée/Sortie, côté moteur; et
la figure 4 représente l'organigramme du programme d'inversion de sens de rotation du moteur.

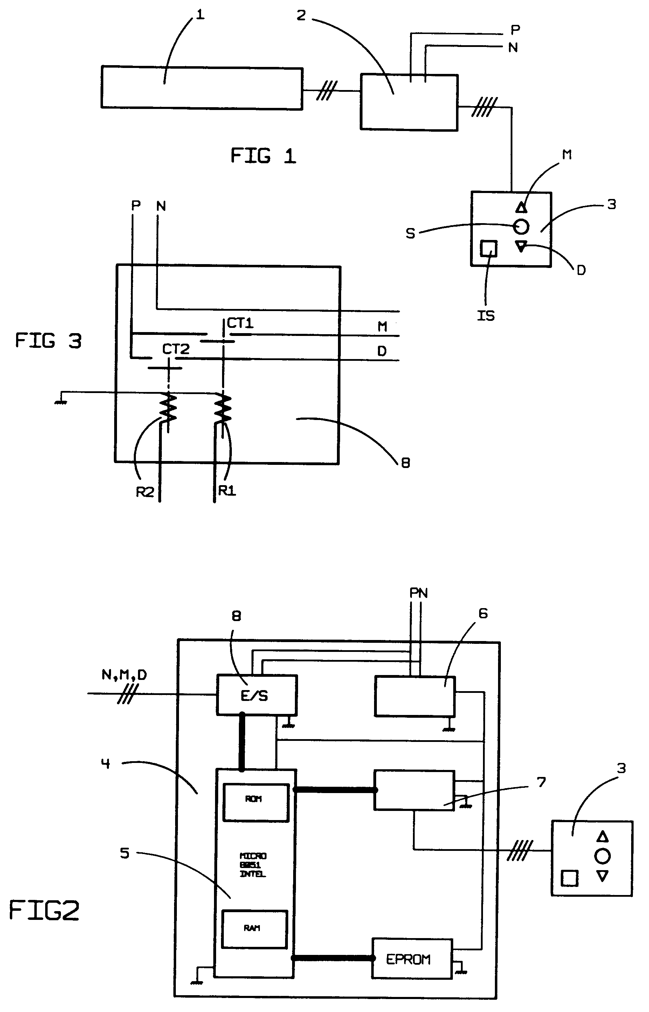

L'installation représentée schématiquement à la figure 1 comporte un moteur asynchrone 1 à deux sens de rotation dont les trois bornes d'entrée sont reliées par trois conducteurs à un boîtier de commande 2 lui même relié par quatre fils à un point de commande 3 équipé de quatre boutons poussoirs M, D, S et IS. Le bouton poussoir M actionne un contact Montée, le bouton poussoir D un contact Descente, le bouton S actionne un contact ayant d'une part la fonction usuelle de contact de Stop et d'autre part une fonction supplémentaire qui est d'assurer l'inversion de sens de rotation du moteur lorsque le contact correspondant au bouton poussoir IS est activé. P et N désignent comme à l'ordinaire l'alimentation par le secteur.

Le boîtier de commande 2 abrite une unité logique de traitement (ULT) 4 comprenant un micro-calculateur 5, en l'occurrence un micro-calculateur INTEL 8051 avec ses mémoires ROM et RAM associé à une mémoire EPROM. Le micro-calculateur 5 est alimenté par l'intermédiaire d'une alimentation stabilisée 6 et il est relié, d'une part, au point de commande 3 par une interface "utilisation" 7 et, d'autre part, au moteur 1 par une interface E/S 8.

L'interface 8 est représentée plus en détail à la figure 3. Elle comprend deux relais R1 et R2 actionnant respectivement un contact CT1 et CT2. Les relais R1 et R2 sont commandés par le micro-calculateur 5. La fermeture du contact CT1 a pour effet de relier la phase P du réseau au conducteur Montée M, tandis que la fermeture du contact CT2 a pour effet de relier cette même phase au conducteur Descente D allant au moteur 1. Les contacts CT1 et CT2 assurent donc la rotation du moteur 1 dans un sens ou dans l'autre.

Le programme principal d'inversion est emmagasiné dans la mémoire ROM.

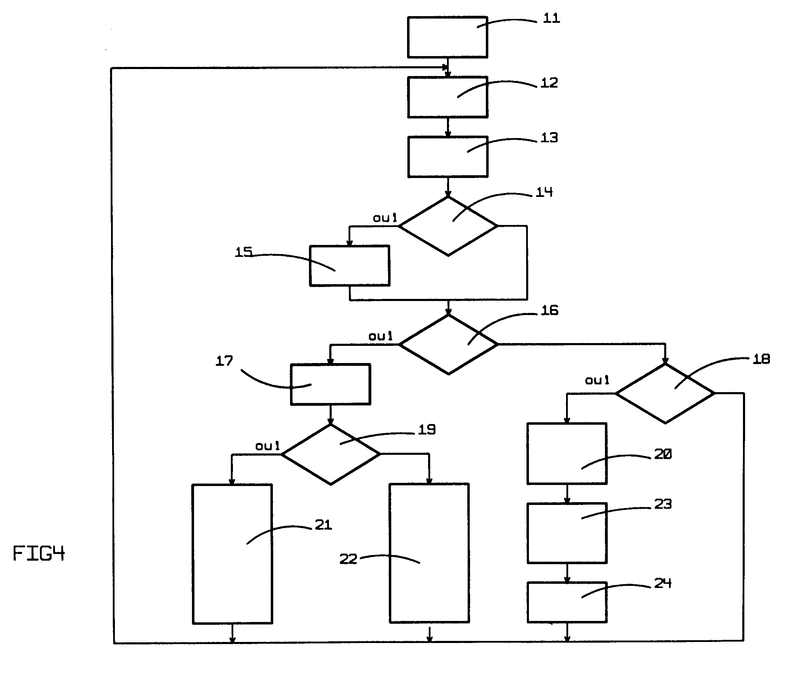

L'organigramme des programmes du micro-calculateur 5 est représenté à la figure 4.

L'instruction 11 est une instruction d'initialisation.

L'instruction 12 est une instruction de chargement du flag de sens de rotation sauvegardé.

L'instruction 13 est une instruction de scrutation des contacts du point de commande 3.

L'instruction 14 teste l'état du contact IS.

L'instruction 15 est une instruction de complémentation du flag d'inversion de sens.

L'instruction 16 teste si le flag d'inversion est égal à zéro.

L'instruction 17 est une instruction de lecture du flag de sens de rotation.

L'instruction 19 teste si le flag est égal à zéro.

L'instruction 21 est une instruction d'activation de la sortie du micro-calculateur 5 correspondant au contact CT1 avec le contact Descente et du contact CT2 avec le contact Montée ou de désactivation des contacts CT1 et CT2 si le contact S est actionné seul, ce qui correspond à un ordre d'arrêt.

L'instruction 22 est une instruction d'activation de la sortie du micro-calculateur 5 correspondant au contact CT 1 lorsque le contact Montée du point de commande est activé et la sortie correspondant au contact CT2 lorsque le contact Descente du point de commande est activé ou de désactivation CT1 et CT2 si le contact S est activé seul.

L'instruction 18 est une instruction de test si le contact S est activé.

L'instruction 20 est une instruction de complémentation du flag de sens de rotation.

L'instruction 23 est une instruction de sauvegarde du flag de sens de rotation.

L'instruction 24 est une instruction de remise à zéro du flag d'inversion.

Le fonctionnement du dispositif est le suivant :

A la mise sous tension, le dispositif initialisé par l'instruction 11. En particulier, le compteur du micro-calculateur 5 et le flag sont remis à zéro.

L'instruction 12 charge le flag de sens de rotation dans la mémoire RAM, ce sens de rotation ayant été préalablement sauvegardé par l'instruction 23, puis appelle l'instruction 13 qui scrute les contacts du point de commande 3.

En l'absence d'action sur le contact IS, l'instruction 14 appelle l'instruction 16 qui teste que le flag d'inversion = 0. L'instruction 16 appelle l'instruction 17 qui lit le flag de sens de rotation, puis l'instruction 19 qui teste sa valeur.

Si le flag = 0, l'instruction 19 appelle l'instruction 21, qui est le sous-programme d'activation du contact CT1 si le contact Descente D est actionné, d'activation du contact CT2 si le contact Montée M est actionné et de désactivation des contacts CT1 et CT2 si le contact Stop S est actionné. Le programme boucle.

Si l'installateur constate que l'effet produit par l'action des contacts Montée M/Descente D ne correspond pas au sens désiré, il actionne alors le contact IS. Dans ce cas, les instructions 12 et 13 se déroulent comme précédemment. L'instruction 14 teste que le contact IS est activé et appelle l'instruction 15 qui complémente à 1 le flag d'inversion.

Celui-ci étant à 1, l'instruction 16 appelle l'instruction 18.

Si l'installateur actionne à cet instant le contact S, l'instruction 18 appelle l'instruction 20 qui complémente la valeur du flag correspondant (ici à 1), puis appelle l'instruction 23 qui sauvegarde cette valeur dans la mémoire EPROM.

L'instruction 24 remet le flag d'inversion à zéro et le programme boucle.

En l'absence d'action sur le contact IS, les instructions 11, 12, 13, 14, 16, 17 se déroulent comme précédemment décrit, puis l'instruction 19 teste que le flag = 1 et appelle l'instruction 22 qui est le sous-programme inverse de 21. Le contact CT1 est activé avec le contact Montée M et le contact CT2 est activé avec le contact Descente D.

Si l'installateur n'actionne pas le contact S à l'issue de l'instruction 16 testant que le flag d'inversion = 1 le programme reboucle jusqu'à ce l'utilisateur actionne ce contact S, permettant l'inversion du sens de rotation, ou le contact IS, conservant le sens de rotation en cours.

La valeur de flag de sens de rotation étant rechargée à chaque boucle de programme par l'instruction 12, le sens de rotation en cours est conservé même après une panne de courant secteur.

## Revendications

1. Dispositif de commande pour moteur asynchrone à deux sens de rotation utilisé pour l'entraînement d'un store, volet roulant, porte ou similaires, comprenant un boîtier de commande (2) intégré au moteur (1) et un point de commande (3) équipé de contacts Montée (M), Descente (D) et Stop (S) actionnables manuellement et dont l'actionnement assure la rotation du moteur dans le sens désiré, respectivement son arrêt, caractérisé en ce que le boîtier de commande (2) est aussi un boîtier d'alimentation du moteur et contient une unité logique de traitement (4), dans laquelle est mémorisé un programme d'inversion de sens de rotation du moteur et des moyens de commutation (R1, R2) commandés par l'unité logique de traitement pour l'alimentation de l'un ou l'autre des enroulements du moteur et en ce que le point de commande comprend des moyens (IS, S) de mise en oeuvre du programme d'inversion.

2. Dispositif de commande selon la revendication 1, caractérisé en ce que le point de commande (3) comprend un contact supplémentaire (IS) et que l'unité logique de traitement (4) présente des entrées reliées respectivement aux contacts Montée, Descente, Stop et au contact supplémentaire du point de commande (3) et trois sorties destinées à être reliées aux bornes du moteur, dont deux (M, D) déterminent le sens de rotation du moteur, l'unité logique de traitement étant programmée pour activer l'une ou l'autre des sorties déterminant le sens de rotation du moteur, selon que le contact Montée ou Descente est actionné et que le contact Stop et le contact supplémentaire sont actionnés.

3. Dispositif de commande selon la revendication 2, caractérisé en ce que l'unité logique de traitement comprend un micro-calculateur (5), une interface (7) côté point de commande et une interface (8) côté moteur comprenant deux commutateurs (R1, R2) commandés par le micro-calculateur pour assurer l'alimentation de l'une ou l'autre des bornes du moteur déterminant son sens de rotation.

4. Dispositif de commande selon la revendication 3, caractérisé en ce que l'unité logique de traitement comprend des moyens (EPROM) de sauvegarde du sens de rotation.

## Claims

1. A control device for an asynchronous motor having two directions of rotation used for driving a roller-blind, rolling shutter, door or similar objects, comprising a control box (2) integrated with the motor (1) and a control point (3) equipped with Raising (M), Lowering (D) and Stop (S) contacts which can be operated manually and whose operation ensures the rotation of the motor in the desired direction and its stopping respectively, characterized by the fact that the control box (2) is also a supply box for the motor and contains a logic processing unit (4), in which a program for reversing the direction of rotation of the motor is stored, and means of switching (R1, R2) controlled by the logic processing unit for the power supply of one or other of the windings of the motor and by the fact that the control point comprises means (IS, S) of implementing the reversal program.

2. The control device as claimed in claim 1, characterized by the fact that the control point (3) comprises an additional contact (IS) and the logic processing unit (4) has inputs respectively connected to the Raising, Lowering and Stop contacts and to the additional contact of the control point (3) and three outputs intended to be connected to the terminals of the motor, two of which (M, D) determine the direction of rotation of the motor, the logic processing unit being programmed to activate one or other of the outputs determining the direction of rotation of the motor, depending on whether the Raising or Lowering contact is operated and on whether the Stop contact and the additional contact are operated.

3. The control device as claimed in claim 2, characterized by the fact that the logic processing unit comprises a microcomputer (5), an interface (7) on the control point side and an interface (8) on the motor side comprising two switches (R1, R2) controlled by the microcomputer in order to ensure the power supply of one or other of the terminals of the motor determining its direction of rotation.

4. The control device as claimed in claim 3, characterized by the fact that the logic processing unit comprises means (EPROM) of saving the direction of rotation.

## Patentansprüche

1. Antriebsvorrichtung für Asynchronmotor mit zwei Drehungsrichtungen für den Antrieb einer Jalousie, eines Rolladens, einer Tür oder dergleichen, mit einem in dem Motor (1) eingebauten Steuergehäuse (2) und einem Steuergehäuse (3), der mit Abwärtsbewegungkontakten (M), Aufwärtsbewegungkontakten (D) und Stoppkontakten (S) versehen ist, welche von Hand betätigt werden können, und deren Betätigung die Drehung des Motors in der gewünschten Richtung, bzw. dessen Stoppen gewährleistet, dadurch gekennzeichnet, dass das Steuergehäuse (2) auch ein Motorversorgungsgehäuse ist, und eine logische Einheit (4) und Stromwendemittel (R1, R2) enthält, wobei in der logischen Einheit (4) ein Programm für die Drehrichtungsumkehrung des Motors gespeichert ist, und die Stromwendemittel durch die logische Einheit für die Versorgung von der einen oder anderen Wicklung des Motors angetrieben wird, und dass der Steuerpunkt Mittel (IS, S) für die Ausführung des Umkehrungsprogramms enthält.

2. Antriebsvorrichtung nach Anspruch 1, dadurch gekennzeichnet, dass der Steuerpunkt (3) einen zusätzlichen Kontakt (IS) aufweist, und dass die logische Einheit (4) Eingänge und drei Ausgänge aufweist, wobei die Eingänge entsprechend mit den Aufwärtsbewegung-, Abwärtsbewegung-, Stoppkontakten und dem zusätzlichen Kontakt des Steuerpunktes (3) verbunden sind, und die Ausgänge dazu bestimmt sind, mit den Motorklemmen verbunden zu werden, von denen zwei (MD) die Drehrichtung des Motors bestimmen, wobei die logische Einheit programmiert ist, um den einen oder den anderen Ausgang, der die Drehrichtung des Motors bestimmt, zu aktivieren, je nachdem der Abwärts- und Aufwärtsbewegungkontakt angetrieben ist und der Stoppkontakt und der zusätzliche Kontakt angetrieben sind.

3. Antriebsvorrichtung nach Anspruch 2, dadurch gekennzeichnet, dass die logische Einheit mit einem Mikrokrechner (5), einer Schnittstelle (7) auf der Seite des Steuerpunktes, und einer Schnittstelle (8) auf der Seite des Motors versehen ist, wobei diese letzte Schnittstelle zwei Stromwender (R1, R2) aufweist, welche durch den Mikrorechner angetrieben werden, um die Versorgung der einen oder der anderen Motorklemmen zu gewährleisten, wodurch die Drehrichtung des Motors bestimmt wird.

4. Antriebsvorrichtung nach Anspruch 3, dadurch gekennzeichnet, dass die logische Einheit Mittel (EPROM) für die Speicherung der Drehrichtung aufweist.
